# EUROPÄISCHE PATENTSCHRIFT

(11) **EP 0 786 236 B1**
(45) Veröffentlichungstag und Bekanntmachung des Hinweises auf die Patenterteilung: **07.11.2001**
(21) Anmeldenummer: 97100654.9
(22) Anmeldetag: 17.01.1997
(51) Int. Cl.: A61C 5/00

(54) **Formkörper**
Inlay
Inlay

(30) Priorität: 24.01.1996 DE 19602500
(43) Veröffentlichungstag der Anmeldung: 30.07.1997
(73) Patentinhaber: Ivoclar Vivadent AG, 9494 Schaan (LI)
(72) Erfinder: Burkhart, Hugo, Dr., 97265 Hettstadt (DE)
(74) Vertreter: Baronetzky, Klaus, Dipl.-Ing.

(56) Entgegenhaltungen:
- WO-A-93/13726
- DE-C- 4 323 461

## Beschreibung

Die Erfindung betrifft einen Formkörper für einen Zahn, gemäß dem Oberbegriff von Anspruch 1.

Derartige Formkörper, die auch als Einlagefüllkörper bezeichnet werden, werden verwendet, wenn eine nach außen frei liegende Kavität gefüllt werden soll. Mittels eines an sich bekannten Werkzeugs wie eines Ultraschallwerkzeugs wird eine entsprechende Kavität präpariert und für das Einsetzen eines Einlagefüllkörpers vorbereitet.

Verschiedene Formen von Einlagefüllkörpern sind bereits vorgeschlagen worden. Problem ist, daß trotz unterschiedlicher Zahnformen und zu erstellender Kavitäten mit einer begrenzten Anzahl von Einlagefüllkörpern ausgekommen werden muß, allein schon, um die Lagerhaltung in Dentallabors bzw. Zahnarztpraxen in vertretbarem Rahmen zu halten.

Besonders kritisch ist die Verwendung eines Formkörpers oder Einlagefüllkörpers im Approximalbereich eines Zahns. Aufgrund der Nachbarschaft zu dem nächsten Zahn steht nur ein sehr begrenzter Arbeitsraum zur Verfügung, was sowohl für die Erzeugung der Kavität mittels eines entsprechend geformten Werkzeugs, meist eines Ultraschallwerkzeugs, als auch für das Einsetzen des Einlagefüllkörpers und das Einbringen eines entsprechenden Verbindungsmaterials zwischen Zahn und Einlagefüllkörper gilt.

Zur Verbesserung der Haltbarkeit und der mechanischen Verankerung bei gleichzeitiger Vereinfachung des Einsetzens ist es zum Beispiel aus der DE 36 20 542 und der DE 37 43 433 bekannt, einen Einlagefüllkörper zu verwenden, der einen trapezförmigen Grundaufbau aufweist. Um nicht zuviel gesundes Zahnmaterial entfernen zu müssen, ist es wichtig, einen Trapezwinkel der sich vertikal erstreckenden Schrägflächen, der sog. Axialapproximalschrägen, zu wählen, der weder so groß ist, daß zuviel Zahnsubstanz durch die Einbringung der Kavität verlorengeht, noch so klein, daß sich Schwierigkeiten bei insbesondere kleinen Zähnen ergeben. Die Verschalkörper nach dem Stand der Technik sind relativ breit, so daß beim Präparieren des Zahns viel Zahnsubstanz abgetragen werden muß.

Dementsprechend ist vorgeschlagen worden, für unterschiedliche Zahngrößen und Konstruktionen auch unterschiedliche Axialapproximalschrägen bereitzustellen. Größere Axialapproximalabschrägungswinkel ergeben noch mehr Zahnsubstanzverlust, ohne daß die Sicherheit der Restauration entsprechend verbessert würde und verursachen insbesondere auch noch Schwierigkeiten bei der Präparation des Inserts.

Demgegenüber liegt der Erfindung die Aufgabe zugrunde, einen Einlagefüllkörper gemäß dem Oberbegriff von Anspruch 1 zu schaffen, der hinsichtlich der Funktionalität und der Einsetzbarkeit bei unterschiedlichen Versorgungssituationen eines Zahns verbessert ist, obwohl die Lagerhaltung erleichtert ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, daß mit dem hier vorgestellten Formkörper, der auch als Outsertkörper bezeichnet werden kann, die Kastenform mit der Trapezform kombiniert wird. Überraschend ergibt sich hierdurch eine bessere Anpassung an unterschiedliche Versorgungssituationen, so daß ein und derselbe Formkörper sowohl bei relativ kleinen rotierten oder aus der Zahnreihe abweichenden Zähnen als auch bei relativ großen eingesetzt werden kann. Bspw. ist es lediglich erforderlich, mit 5 unterschiedlichen Größen für alle auftretenden Versorgungssituationen zu arbeiten und mit dem gleichen Formkörper eine mittelgroße Versorgungsstelle sowohl in einem relativ kleinen Zahn als auch in einem relativ großen Zahn abzudecken. Durch die Kombination der Kasten- mit der Trapezform ist der Verlust an Zahnsubstanz im Verhältnis zur Wahl des Abschrägungswinkels so gering wie möglich. Bspw. kann mit einem Abschrägungswinkel von 45° für alle Formkörper - und damit auch für die entsprechenden Instrumente zur Herstellung der Kavität - gearbeitet werden. Da das Trapez weiter außen ansetzt, kann trotz der erwünschten Führungswirkung der Zahnsubstanzverlust gering gehalten werden. Dennoch ergeben sich keine Schwierigkeiten bei der Insertherstellung. Der Formkörper bewirkt, daß relativ wenig Zahnsubstanz entfernt werden muß und der Substanzverlust Richtung Pulpa so gering wie möglich gehalten wird.

Besonders günstig läßt sich die erfindungsgemäße Approximalstufe, die sich durch die Kombination der Kastenform mit der Trapezform ergibt, dann einsetzen, wenn sie in okklusaler Richtung schmaler werdend verläuft und im Okklusionsbereich der Querschnitt praktisch trapezförmig - ggf. mit einer an den Zahn angepaßten Krümmung - ausgebildet ist. Damit ergibt sich in Okklusalrichtung eine sichere Adaption ohne Haftprobleme. Auch bei entsprechendem Kontaktdruck vom Nachbarzahn erfolgt eine sichere mechanische Abstützung ohne große Wechselbelastung für das Verbindungsmaterial, wie Zahnzement oder dgl., zwischen dem Einlagefüllkörper und der Zahnsubstanz.

Außerdem wird durch den relativ großen Winkel der Approximalschräge vermieden, daß die Präparationsgrenzen, also der Übergang zwischen den präparierten Flächen und der unpräparierten Außenfläche des Zahns, zu abrupt ist. Dies erleichtert die frakturlose Präparation.

Besonders günstig ist eine Divergenz des Einlagefüllkörpers in okklusaler Richtung, wobei die Divergenz sich sowohl auf die Axialapproximalstufe als auch auf die Axialapproximalschräge beziehen kann. Hierdurch wird der Kontakt mit der Zahnsubstanz auch bei tiefen approximalen Kontaktpunkten, runden Zähnen oder ausgedehnten Defekten begünstigt.

Gemäß einer weiteren Ausgestaltung ist zwischen der Gingivalstufe und der Gingivalschräge eine zervikale Rille ausgebildet. Diese bewirkt, daß sich das Outsert oder der Formkörper beim Einsetzen automatisch ausrichtet. Die Position des Formkörpers bezogen auf die Außenfläche des Zahns ist damit reproduzierbar, und zugleich ergibt sich der besondere Vorteil, daß vertikale Rotationsfehler sicher vermieden werden, nachdem die Rille sich bevorzugt über die gesamte Breite des Formkörpers - und entsprechend des die Kavität herstellenden Werkzeugs - erstreckt.

Gerade in Verbindung mit der Kastenform im gingivalen Approximalbereich ergibt sich eine ausgesprochen stabile und führungssichere Abstützung, so daß der verwendete Zahnzement oder die anderen Verbindungsmaterialien im Hinblick auf die Formschlüssigkeit der Verbindung zwischen Zahn und Insert nur geringen Belastungen unterworfen ist. Die gingivale Abschrägung kann besonders günstig zwischen 30° und 45° betragen, wobei es erfindungsgemäß besonders günstig ist, daß Probleme mit der Adaption der Matrize und Kantenfrakturen oder Lufteinschlüsse, wie sie bereits beobachtet worden sind, sicher vermieden werden können.

Die zervikale Rille ermöglicht eine gewisse Rotation des Formkörpers um eine horizontale Achse, wie sie manchmal klinisch notwendig ist, um die approximalen Kontaktpunkte ideal gestalten zu können.

Der erfindungsgemäße Formkörper läßt sich aufgrund seiner besonderen Gestaltung auch bei vergleichsweise großen Kavitäten in kleineren Zähnen, wie den Prämolaren, einsetzen. Dies liegt an dem relativ geringen Verbrauch an Zahnsubstanz und der dementsprechend sicheren Verankerung.

Besonders günstig ist es auch, daß durch die Gingivalstufe in Verbindung mit der Gingivalschräge ein zweidimensionales Bezugssystem vorliegt, das die sichere Führung erleichtert und eine weitgehende Standardisierung der horizontalen Präparationstiefe ermöglicht. Diese vorgegebene Tiefe ist Voraussetzung für einen guten approximalen Kontakt nach der Restauration mit dem Formkörper. Der gute approximale Kontakt ergibt sich mit dem erfindungsgemäßen Formkörper praktisch automatisch. Gemäß einer vorteilhaften Ausgestaltung ist die approximale Kontaktfläche zum Zahn leicht konvex ausgestaltet, wobei die Konvexität in gingivaler Richtung zunimmt.

Gemäß einer besonders bevorzugten Ausgestaltung ist es vorgesehen, daß der Übergang zwischen Approximalschräge und Gingivalschräge eine gebrochene Kante oder einen Radius aufweist.

Weitere Einzelheiten, Vorteile und Merkmale ergeben sich aus der nachfolgenden Beschreibung eines Ausführungsbeispiels der Erfindung anhand der Zeichnung.

Es zeigen:
- Fig. 1: eine Approximalansicht eines erfindungsgemäßen Formkörpers in einer Ausführungsform;
- Fig. 2: eine Seitenansicht des Formkörpers gemäß Fig. 1;
- Fig. 3: einen Horizontalschnitt durch den Formkörper gemäß Fig. 1 entlang der Linie III-III;
- Fig. 4: einen Horizontalschnitt durch den Formkörper gemäß Fig. 1 entlang der Linie IV-IV; und
- Fig. 5: einen Horizontalschnitt durch den Formkörper gemäß Fig. 1 entlang der Linie V-V.

Der erfindungsgemäße Formkörper 10 weist in seinem gingivalen Bereich eine Gingivalstufe 12 und eine sich daran anschließende Gingivalschräge 14 auf. In okklusaler Richtung betrachtet erstreckt sich von der Gingivalstufe eine Axialapproximalfläche 16 sowie seitlich je eine Axialapproximalschräge 18 und 20, die sich an die Gingivalschräge 14 anschließt, und eine Axialapproximalstufe 22 und 24, die sich je an die Gingivalstufe 12 anschließt. An seiner Okklusalfläche 26 weist der Formkörper 10 oder das Outsert einen beliebigen an sich bekannten Aufbau auf. Zur Vereinfachung des Einsetzens ist er mit einem Halter 28 versehen, der entfernt wird, sobald das Insert eingesetzt ist. Der Einfachheit halber ist der Halter 28 verkürzt dargestellt, und die Okklusalfläche 26 ist als gerade Fläche dargestellt.

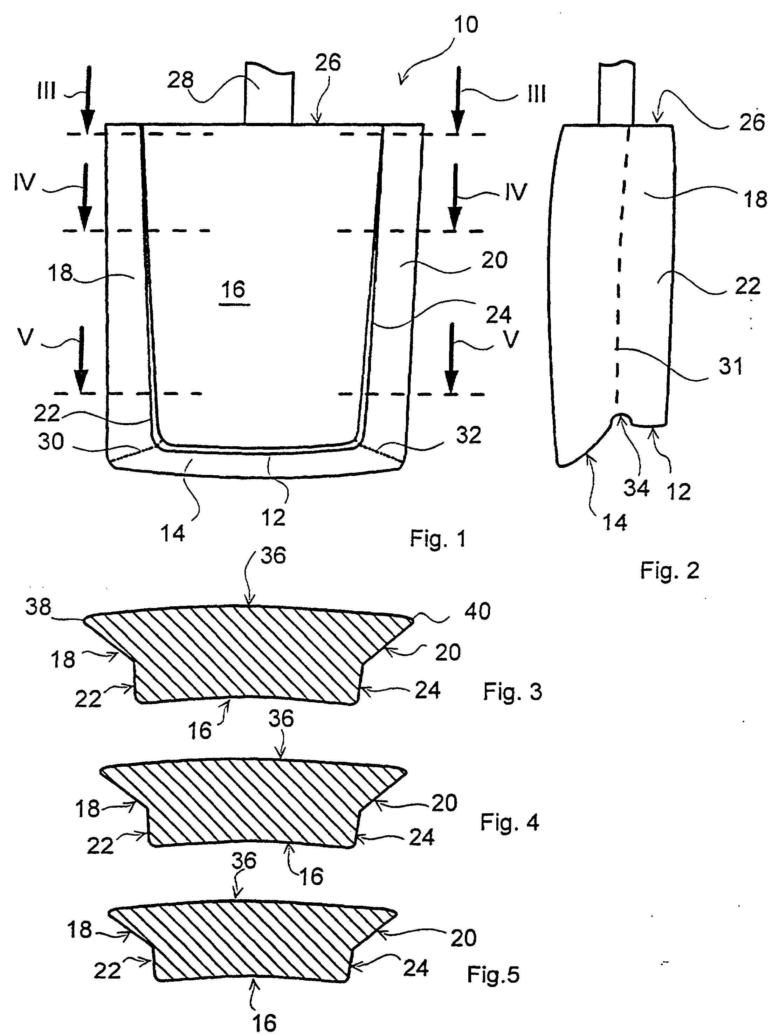

Sowohl die Gingivalstufe 12 als auch die Gingivalschräge 14 sind leicht konvex ausgebildet, wie es aus Fig. 1 ersichtlich ist. Sie weisen je zu den Axialapproximalstufen bzw. Axialapproximalschrägen 18 bis 24 abgerundete Übergänge 30, 32 auf, die in Fig. 1 strichpunktiert dargestellt sind.

Die Axialapproximalstufen 22, 24 divergieren in okklusaler Richtung voneinander, und zwar bei dem bevorzugten Ausführungsbeispiel um 4°. Es versteht sich, daß der Divergenzwinkel bei Bedarf auch anders gewählt werden kann. Zusammen mit der Gingivalstufe 12 bilden sie die Grundform eines Parallelepiped mit sich im wesentlichen lotrecht zueinander erstreckenden Flächen, das ein zweidimensionales Bezugssystem aufspannt.

Auch die Axialapproximalschrägen 18 und 20 divergieren voneinander, wobei der Divergenzwinkel in okklusaler Richtung etwa 8° beträgt. Bevorzugt sind die beiden Divergenzwinkel aneinander angenähert.

Wie aus Fig. 1, aber besser noch aus Fig. 2 ersichtlich ist, nimmt in einer Ausgestaltung die Breite der Axialapproximalstufen in okklusaler Richtung betrachtet über den Verlauf etwas ab, und die Breite der Axialapproximalschrägen 18, 20 nimmt in okklusaler Richtung betrachtet entsprechend zu. Der Verlauf der Übergangslinie 31, die bevorzugt einen Innenradius aufweist, kann den Erfordernissen entsprechend ausgebildet sein. Bevorzugt ist sie eine nach oben leicht gekrümmte Kurve, wie es aus Fig. 2 ersichtlich ist, und endet im Bereich der Okklusalfläche.

Wie aus Fig. 2 ersichtlich ist, sind sowohl die Gingivalschräge 14 als auch die Gingivalstufe 12 leicht ballig ausgebildet, wobei die Balligkeit zur Erzielung einer besseren Übersicht etwas übertrieben dargestellt ist. Zwischen Okklusalstufe und Okklusalschräge erstreckt sich eine deutliche zervikale Rille 34, die in ihrer Größe ebenfalls übertrieben dargestellt ist. Sie verläuft im wesentlichen halbkreisförmig voll über die gesamte Breite der Gingivalstufe 12 und ergibt praktisch eine sich horizontal in bukkal-lingualer Richtung erstreckende Rotationsachse.

In Fig. 3 ist dargestellt, wie ein erfindungsgemäßer Einlagefüllkörper 10 im okklusalnahen Bereich ausgebildet ist. Wie ersichtlich ist, hat der Formkörper 10 im Bereich der Axialapproximalschrägen 18, 20 einen im wesentlichen trapezförmigen Grundaufbau mit leicht balligen Außenflächen. Die Approximalfläche 16 ist in dem vorgesehenen Ausführungsbeispiel konkav, was für die Stabilität der seitlichen Abstützung günstig ist und einer Rotation um eine vertikale Achse entgegenwirkt. Die nach innen gerichtete Wölbung ergibt bei der Präparation einen geringen Zahnsubstanzverlust Richtung Pulpa.

Wie auch aus Fig. 4 ersichtlich ist, erstreckt sich an die Axialapproximalschrägen 18 und 20 anschließend an der dem Zahn zugewandten Seite je die Axialapproximalstufe 22 bzw. 24. Im Bereich des Schnitts entlang der Linie IV-IV ist die axiale Länge der Axialapproximalstufen 22 und 24 etwas geringer als die jeweilige Länge der Axialapproximalschrägen 18 und 20. Die Approximalfläche 16 verläuft in dieser Höhe nahezu gerade.

Hier ist der Formkörper 10 etwas schmaler und etwas weniger dick als im Bereich des Schnitts entlang der Linie III-III.

Wie aus Fig. 5 ersichtlich ist, verlaufen im gingivalen Bereich die Axialapproximalstufen und -schrägen je über etwa die gleiche axiale Strecke. Die Approximalfläche 16 ist in diesem Bereich nur leicht konkav ausgebildet.

Wie aus den Fig. 3 bis 5 ebenfalls ersichtlich ist, weisen die Axialapproximalschrägen 18 und 20 zu einer Außenfläche 36, die ebenfalls ballig ausgebildet ist, je Abrundungen 38 und 40 auf. Die Radien für diese Abrundungen liegen bei etwa 0,2 bis 0,3 mm.

Es versteht sich, daß eine Anpassung an die Bedürfnisse der jeweiligen Zahnarztpraxis ohne weiteres bei Bedarf möglich ist. Bspw. können, wenn mit 5 Größen für unterschiedliche Versorgungsgrößen der Kavitäten gearbeitet wird, die Winkel der axial-approximalen Abschrägungen bei den Formkörpern für kleine Kavitäten zwischen 25 und 50° liegen, bei denjenigen für mittlere Kavitäten zwischen 40 und 60° und bei großen Kavitäten durchaus noch mehr, bspw. etwa 80°.

Ferner kann die Übergangslinie 31 eine beliebige Form aufweisen, die auch deutlich anders als in Fig. 2 dargestellt verlaufen kann. Beispielsweise kann sie auch oben knapp unterhalb der Okklusalfläche 26 an der Approximalfläche 16 enden. Der Verlauf kann gerade oder zur Approximalfläche 16 hin oder zur Außenfläche 36 hin leicht gebogen vorgesehen sein, wobei es sich versteht, daß das Einsetzen des Outserts durch die Form nicht behindert werden darf.

Ferner kann der Dickenverlauf an die Erfordernisse angepaßt werden. Eine leichte Divergenz zur Okklusalfläche 16 hin ist bevorzugt, aber eine gleichmäßige Dicke ist ebenso möglich.

Günstig ist jedenfalls, daß trotz dieser unterschiedlichen Formen je auch bei unterschiedlichen zu versorgenden Zähnen nur mit einer Größe des Formkörpers 10 für eine Kavitätsgröße gearbeitet werden muß, was der Vereinfachung der Lagerhaltung zugutekommt.

## Patentansprüche

1. Formkörper, für einen Zahn, insbesondere für den Approximalbereich des Zahns, mit einer Gingivalstufe (12) und einer sich an diesen anschließenden Gingivalschräge (14) und einer sich in vertikaler Richtung erstreckender Axialapproximalschräge (18, 20), **dadurch gekennzeichnet, daß** eine Axialapproximalstufe (22, 24) vorgesehen ist, die in gingival-okklusaler Richtung verläuft und sich an die Axialapproximalschräge (18, 20) anschließt.

2. Formkörper nach Anspruch 1, **dadurch gekennzeichnet, daß** die Axialapproximalstufe (22, 24) ausgehend von der Gingivalstufe (12) in okklusaler Richtung schmaler werdend verläuft und in die Axialapproximalschräge (18, 20) übergeht und insbesondere stetig schmaler wird.

3. Formkörper nach einem der vorhergehenden Ansprüche, **dadurch gekennzeichnet, daß** die Axialapproximalschräge (18, 20) in okklusaler Richtung stetig breiter wird und im okklusalen Bereich sich über die gesamte Tiefe des Formkörpers (10) erstreckt.

4. Formkörper nach einem der vorhergehenden Ansprüche, **dadurch gekennzeichnet, daß** der Formkörper (10) in der Horizontalebene betrachtet einen im wesentlichen trapezförmigen Aufbau aufweist und eine Dicke von etwa 0,8 bis 3,5 mm, insbesondere höchstens 3 mm, aufweist, die insbesondere zur Okklusalfläche zunimmt.

5. Formkörper nach einem der vorhergehenden Ansprüche, **dadurch gekennzeichnet, daß** er eine im wesentlichen größere horizontale Breite als vertikale Länge aufweist, wobei unterschiedliche Formkörper einen Satz bilden, dessen erstes Exemplar ein Längen/Breitenverhältnis von 6,5 mm zu 6,3 mm und dessen letztes ein Verhältnis von 5,8 mm zu 7,3 mm aufweist.

6. Formkörper nach einem der vorhergehenden Ansprüche, **dadurch gekennzeichnet, daß** die Axialapproximalschräge (18, 20) einen Winkel von 20 bis 75°, vorzugsweise 30 bis 60°, insbesondere 35 bis 50° und bevorzugt etwa 45° aufweist.

7. Formkörper nach einem der vorhergehenden Ansprüche, **dadurch gekennzeichnet, daß** die Gingivalschräge (14) einen Winkel von 20 bis 75°, vorzugsweise 30 bis 60°, insbesondere 35 bis 50° und bevorzugt etwa 45° aufweist.

8. Formkörper nach einem der vorhergehenden Ansprüche, **dadurch gekennzeichnet, daß** zwischen Gingivalstufe (12) und Gingivalschräge (14) eine zervikale Rille (34) ausgebildet ist.

9. Formkörper nach Anspruch 8, **dadurch gekennzeichnet, daß** die zervikale Rille (34) eine Breite von etwa 0,5 mm aufweist und sich über die gesamte Länge des Inserts (10) erstreckt.

10. Formkörper nach einem der Ansprüche 8 oder 9, **dadurch gekennzeichnet, daß** die zervikale Rille (34) etwa halbrund ausgebildet ist und insbesondere einen halbkreisförmigen Querschnitt aufweist.

11. Formkörper nach einem der vorhergehenden Ansprüche, **dadurch gekennzeichnet, daß** die Axialapproximalstufen (22, 24) in okklusaler Richtung betrachtet im Winkelbereich von 0° bis 20° voneinander divergieren, und zwar insbesondere um etwa 4°.

12. Formkörper nach einem der vorhergehenden Ansprüche, **dadurch gekennzeichnet, daß** die Axialapproximalschrägen (18, 20) in okklusaler Richtung betrachtet im Winkelbereich von 0° bis 20° voneinander divergieren, und zwar insbesondere in einem Divergenzwinkel von etwa 8°.

13. Formkörper nach einem der vorhergehenden Ansprüche, **dadurch gekennzeichnet, daß** der Formkörper (10) eine konvex gekrümmte Approximalstufe (22, 24) aufweist.

14. Formkörper nach einem der vorhergehenden Ansprüche, **dadurch gekennzeichnet, daß** der Übergang zwischen der Approximalschräge (18, 20) und der Gingivalschräge (14) eine gebrochene Kante (30, 32) aufweist.

## Claims

1. A moulding for a tooth, in particular for the approximal region of the tooth, having a gingival stage (12) and a gingival inclination (14) adjacent thereto and an axial approximal inclination (18,20) extending in a vertical direction, **characterised in that** an axial approximal stage (22,24) is provided which extends in a gingival-occlusal direction and is adjacent the axial approximal inclination (18,20).

2. A moulding according to Claim 1, **characterised in that** the axial approximal stage (22,24), starting from the gingival stage (12), extends to become narrower in the occlusal direction and merges into the axial approximal inclination (18,20) and, in particular, becomes continuously narrower.

3. A moulding according to any one of the preceding Claims, **characterised in that** the axial approximal inclination (18,20) becomes continuously wider in the occlusal direction and in the occlusal region extends over the entire depth of the moulding (10).

4. A moulding according to any one of the preceding Claims, **characterised in that**, viewed in the horizontal plane, the moulding (10) is of substantially trapezium-shaped design and has a thickness of approximately 0.8 to 3.5 mm, in particular not more than 3 mm, which increases in particular relative to the occlusal surface.

5. A moulding according to any one of the preceding claims, **characterised in that** it has a substantially greater horizontal width than vertical length, wherein different mouldings form a set, the first example of which has length/width ratio of 6.5 mm to 6.3 mm and the last example of which has a ratio of 5.8 mm to 7.3 mm.

6. A moulding according to any one of the preceding claims, **characterised in that** the axial approximal inclination (18,20) has an angle of 20 to 75°, preferably 30 to 60°, in particular 35 to 50° and preferably approximately 45°.

7. A moulding according to any one of the preceding Claims, **characterised in that** the gingival inclination (14) has an angle of 20 to 75°, preferably 30 to 60°, in particular 35 to 50° and preferably approximately 45°.

8. A moulding according to any one of the preceding Claims, **characterised in that** a cervical groove (34) is formed between the gingival stage (12) and the gingival inclination (14).

9. A moulding according to Claim 8, **characterised in that** the cervical groove (34) has a width of 0.5 mm and extends over the entire length of the insert (10).

10. A moulding according to either Claim 8 or Claim 9, **characterised in that** the cervical groove (34) is approximately semicircular and, in particular, is of semicircular cross-section.

11. A moulding according to any one of the preceding Claims, **characterised in that**, viewed in the occlusal direction, the axial approximal stages (22,24) diverge from one another in an angular range of from 0° to 20°, and in particular by approximately 4°.

12. A moulding according to any one of the preceding Claims, **characterised in that**, viewed in the occlusal direction, the axial approximal inclinations (18,20) diverge from one another in an angular range of from 0° to 20°, and in particular at a divergent angle of approximately 8°.

13. A moulding according to any one of the preceding Claims, **characterised in that** the moulding (10) has a convexly curved approximal stage (22,24).

14. A moulding according to any one of the preceding Claims, **characterised in that** the transition between the approximal inclination (18,20) and the gingival inclination (14) has a chamfered edge (30,32).

## Revendications

1. Corps moulé pour une dent, en particulier pour la zone proximale de la dent, comportant un gradin gingival (12) et, à la suite de celui-ci, un biseau gingival (14) et un biseau axial-proximal (18, 20) s'étendant dans la direction verticale, **caractérisé en ce qu'**il est prévu un gradin axial-proximal (22, 24) qui s'étend dans la direction gingivale-occlusale et se raccorde au biseau axial-proximal (18, 20).

2. Corps moulé selon la revendication 1, **caractérisé en ce que** le gradin axial-proximal (22, 24) s'étend à partir du gradin gingival (12) en se rétrécissant dans la direction occlusale et se prolonge par le biseau axial-proximal (18, 20) et en particulier s'effile progressivement.

3. Corps moulé selon une des revendications précédentes, **caractérisé en ce que** le biseau axial-proximal (18, 20) s'élargit progressivement dans la direction occlusale et s'étend dans la région occlusale sur toute la profondeur du corps moulé (10).

4. Corps moulé selon une des revendications précédentes, **caractérisé en ce que** le corps moulé (10), vu dans le plan horizontal, a une construction sensiblement trapézoïdale et présente une épaisseur d'environ 0,8 à 3,5 mm, en particulier de 3 mm au plus, qui augmente en particulier vers la face occlusale.

5. Corps moulé selon une des revendications précédentes, **caractérisé en ce qu'**il présente une largeur horizontale sensiblement plus grande que la longueur verticale, différents corps moulés formant un jeu dont le premier exemplaire présente un rapport longueur/largeur de 6,5 mm à 6,3 mm et dont le dernier exemplaire présente un rapport de 5,8 mm à 7,3 mm.

6. Corps moulé selon une des revendications précédentes, **caractérisé en ce que** le biseau axial-proximal (18, 20) présente un angle de 20 à 75°, de préférence de 30 à 60°, en particulier de 35 à 50° et de préférence d'environ 45°.

7. Corps moulé selon une des revendications précédentes, **caractérisé en ce que** le biseau gingival (14) présente un angle de 20 à 75°, de préférence de 30 à 60°, en particulier de 35 à 50° et de préférence d'environ 45°.

8. Corps moulé selon une des revendications précédentes, **caractérisé en ce qu'**une gorge (34) cervicale est aménagée entre le gradin gingival (12) et le biseau gingival (14).

9. Corps moulé selon la revendication 8, **caractérisé en ce que** la gorge (34) cervicale présente une largeur d'environ 0,5 mm et s'étend sur toute la longueur de l'insert (10).

10. Corps moulé selon une des revendications 8 ou 9, **caractérisé en ce que** la gorge (34) cervicale a une forme sensiblement semi-circulaire et présente en particulier une section transversale en forme de demi-cercle.

11. Corps moulé selon une des revendications précédentes, **caractérisé en ce que** les gradins axiaux-proximaux (22, 24), vus dans la direction occlusale, divergent dans une plage angulaire comprise entre 0 et 20°, et en particulier d'environ 4°.

12. Corps moulé selon une des revendications précédentes, **caractérisé en ce que** les biseaux axiaux-proximaux (18, 20), vus dans la direction occlusale, divergent dans une plage angulaire comprise entre 0 et 20°, et en particulier selon un angle de divergence d'environ 8°.

13. Corps moulé selon une des revendications précédentes, **caractérisé en ce que** le corps moulé (10) présente un gradin proximal (22, 24) à courbure convexe.

14. Corps moulé selon une des revendications précédentes, **caractérisé en ce que** la transition entre le biseau proximal (18, 20) et le biseau gingival (14) comporte un pan coupé (30, 32).
